# EUROPEAN PATENT SPECIFICATION

(11) **EP 2 993 957 B1**
(45) Date of publication and mention of the grant of the patent: **06.09.2017**
(21) Application number: 13885909.5
(22) Date of filing: 31.05.2013
(51) Int. Cl.: H04W 8/06, H04W 88/14, H04W 92/04, H04W 36/00

(54) **USER EQUIPMENT MANAGEMENT METHOD, DEVICE AND COMPUTER PROGRAM PRODUCT**
BENUTZERGERÄTEVERWALTUNGSVERFAHREN, -VORRICHTUNG UND -COMPUTERPROGRAMMPRODUKT
PROCEDE, DISPOSITIF ET PRODUIT PROGRAMME INFORMATIQUE DE GESTION D'EQUIPEMENT UTILISATEUR

(43) Date of publication of application: 09.03.2016
(73) Proprietor: Huawei Technologies Co., Ltd., Longgang District Shenzhen, Guangdong 518129 (CN)
(72) Inventor: DENG, Lei, Shenzhen Guangdong 518129 (CN)
(74) Representative: Thun, Clemens
(86) International application number: PCT/CN2013/076588
(87) International publication number: WO 2014/190553

(56) References cited:
- WO-A2-2011/110109
- CN-A- 101 043 703
- CN-A- 101 646 270
- CN-A- 101 820 673
- US-A1- 2011 122 779
- US-A1- 2011 235 505
- US-A1- 2012 023 360
- US-A1- 2013 100 813
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 11)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.5.0, 15 March 2013 (2013-03-15), pages 1-209, XP050692265, [retrieved on 2013-03-15]
- "3rd Generation Partnership Project; Technical Specification Group Services and System Aspects; General Packet Radio Service (GPRS) enhancements for Evolved Universal Terrestrial Radio Access Network (E-UTRAN) access (Release 11)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.5.0, 5 March 2013 (2013-03-05), pages 1-286, XP050691825, [retrieved on 2013-03-05]
- "3rd Generation Partnership Project; Technical Specification Group Radio Access Network; Evolved Universal Terrestrial Radio Access Network (E-UTRAN); S1 Application Protocol (S1AP) (Release 11)", 3GPP STANDARD; 3GPP TS 36.413, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V11.3.0, 15 March 2013 (2013-03-15), pages 1-274, XP050692274, [retrieved on 2013-03-15]
- "3rd Generation Partnership Project; Technical Specification Group Core Network and Terminals; 3GPP System Architecture Evolution; CT WG1 Aspects (Release 8)", 3GPP STANDARD; 3GPP TR 24.801, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.0, 1 December 2008 (2008-12-01), pages 1-215, XP050365687,
- "3rd Generation Partnership Project; Technical Specification Group Core Network and Terminals; 3GPP Evolved Packet System: CT WG4 Aspects (Stage3); Release 8", 3GPP STANDARD; 3GPP TR 29.803, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.9.0, 1 June 2008 (2008-06-01), pages 1-150, XP050373102,

## Description

### TECHNICAL FIELD

Embodiments of the present invention relate to the field of communications technologies, and in particular, to a method, apparatus, and system for managing user equipment.

### BACKGROUND

In order to address wireless broadband challenges and maintain a leading advantage of 3rd Generation Partnership Project (The 3rd generation partnership project, 3GPP) networks, the 3GPP sets forth a Long Term Evolution (long term evolution, LTE) scheme for mobile communications networks. Under the guidance of this evolution scheme, a new mobile communications network architecture is defined, that is, an architecture of a Long Term Evolution/System Architecture Evolution (Long Term Evolution /System Architecture Evolution, LTE/SAE) network system.

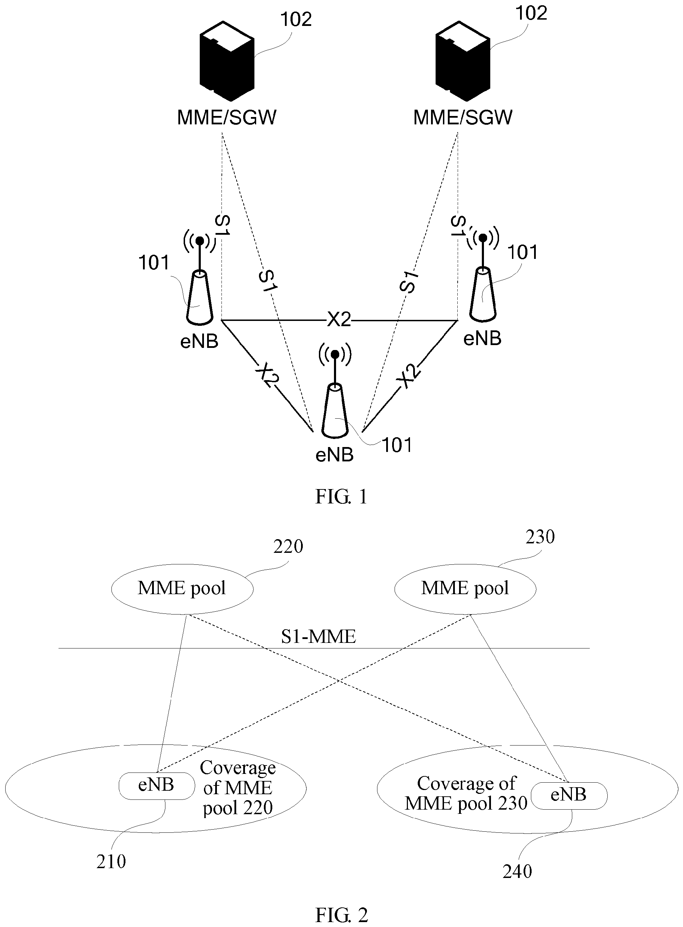

FIG. 1 is an architectural diagram of an LTE/SAE network system in the prior art. The LTE/SAE network system includes evolved Nodes B (evolved Node B, eNB, also referred to as evolved base stations) 101 and mobility management entities/serving gateways (MME/SGW, Mobility Management Entity/Serving Gateway) 102 managing these base stations. S1 links between the MMEs/SGWs 102 and the eNBs 101 are established through S1 interfaces, and X2 links between the eNBs 101 are established through X2 interfaces.

Specifically, an S1 link provides a function of accessing a radio resource in a radio access network, including a control plane function and a user plane function. A control plane interface (S1-MME) of the S1 link provides a function of an application protocol between an eNB and an MME, and provides a signaling bearing function used for transmitting an application protocol message, and a user plane interface (S1-U) of the S1 link provides a function of transmitting user plane data between an eNB and an SGW.

In the LTE/SAE network, one eNB may establish S1-MME connections with a plurality of MMEs, and the plurality of MMEs form an MME pool (MME pool). When user equipment (user equipment, UE) accesses the network from an eNB, the eNB selects an MME to serve the UE and establishes a dedicated S1-MME connection.

In order to improve network reliability, MME pools at different geographical locations may provide redundancy for each other; therefore, an eNB in MME pools that provide mutual backup may connect to a local MME pool, and may also connect to a backup MME pool. For example, in networking shown in FIG. 2, an eNB 210 connects to an MME pool 220, and may also connect to an MME pool 230. For a UE within coverage of the eNB 210, the MME pool 220 is a local MME pool (local MME pool) and the MME pool 230 is a backup MME pool (redundancy MME pool or backup MME pool). When a fault occurs in the local MME pool 220 accessed by the UE, the eNB 210 within coverage of the local MME pool 220 establishes an S1-MME connection with the backup MME pool 230, and the UE within the coverage of the local MME pool 220 is migrated to the backup MME pool 230.

Based on an area-based MME management policy, when the local MME pool 220 is recovered, the UE that is previously migrated to the backup MME pool 230 needs to be migrated back to the local MME pool 220. However, at present, a problem of UE migration failure is encountered when a UE is migrated from a backup MME pool back to a local MME pool.

WO 2011/110109 A2 discloses a fault processing method. In the method, an eNB receives addresses of a first MME and a second MME and regards the two addresses as two destination addresses of a same logical MME (MME a). The second MME backups user service data of the first MME, and when the first MME fails, an eNB switches the connection from the first MME to the second MME, so that the second MME processes the user service instead of the first MME. Thereby a service delay is reduce and service continuity is ensured. Further, when the failure of the first MME recoveries, the first MME sends a UE data request message to the second MME, and the second MME sends data of UE attached to the MME a to the first MME, and releasing corresponding resources. The first MME further processes the user service again. Specifically, when the failure of the first MME recoveries, the IP address of the first MME is activated, the eNB switch the IP address internally, that is, the eNB sends an SIAP message to the IP address of the first MME.

US 2013/100813 A1 discloses a method for policy-driven load balancing of MMEs and MME pools by migrating eNodeBs service responsibilities among MMEs.

### SUMMARY

In view of this, embodiments of the present invention provide a method and apparatus for managing user equipment, to address a problem that user equipment fails to be migrated from a backup MME pool to a local MME pool. The invention is defined in the independent claims. Embodiments of the invention are defined in the dependent claims. According to a first aspect, a method for managing user equipment is provided, including: determining, by a first mobility management entity (MME), whether user equipment accessing the first MME is user equipment within coverage of a second MME pool, where the first MME is located in a first MME pool, and the first MME pool is a backup MME pool of the second MME pool, and when a fault occurs in the second MME pool, the user equipment within coverage of the second MME pool accesses the first MME pool; and off-loading, by the first MME, the user equipment when the user equipment is the user equipment within coverage of the second MME pool, and the second MME pool returns to a normal state, wherein the off-loading refers to releasing an S1 connection and an radio resource control, RRC, connection between the first MME and the user equipment.

In a first possible implementation of the first aspect, the determining, by a first MME, whether user equipment accessing the first MME is user equipment within coverage of a second MME pool includes: determining, according to tracking area information registered by the user equipment, whether the user equipment is user equipment within coverage of the second MME pool.

With reference to the first possible implementation of the first aspect, in a second possible implementation of the first aspect, before the determining, by a first MME, whether user equipment accessing the first MME is user equipment within coverage of a second MME pool, the method further includes: receiving tracking area information reported by a base station, where the user equipment is within coverage of the base station; and receiving the tracking area information registered by the user equipment and reported by the user equipment; and the determining, by a first MME, whether user equipment accessing the first MME is user equipment within coverage of a second MME pool includes: determining whether the tracking area information reported by the base station is consistent with the tracking area information registered by the user equipment; and when the tracking area information reported by the base station is consistent with the tracking area information registered by the user equipment, determining that the user equipment is user equipment within coverage of the second MME pool.

With reference to the first or second possible implementation of the first aspect, in a third possible implementation of the first aspect, the tracking area information registered by the user equipment is a tracking area identity (TAI) or tracking area code (TAC).

With reference to the first aspect, in a fourth possible implementation of the first aspect, the method further includes: when the user equipment accesses the first MME from an S1 link between a base station within coverage of the second MME pool and the first MME, allocating a subscriber identity to the user equipment, where the subscriber identity includes a flag, and a value of the flag is a preset value, where the determining, by a first MME, whether user equipment accessing the first MME is user equipment within coverage of a second MME pool includes: determining whether the flag in the subscriber identity is the preset value; and if the flag is the preset value, determining that the user equipment is user equipment within the coverage of the second MME pool.

With reference to the first aspect, in a fifth possible implementation of the first aspect, the method further includes: when the user equipment accesses the first MME from an S1 link between a base station within coverage of the second MME pool and the first MME, allocating a subscriber identity to the user equipment, where the subscriber identity includes an M-TMSI, and a value of the M-TMSI is within a preset number segment, where the determining, by a first MME, whether user equipment accessing the first MME is user equipment within coverage of a second MME pool includes: determining whether the value of the M-TMSI in the subscriber identity is within the preset number segment; and if the value of the M-TMSI is within the preset number segment, determining that the user equipment is user equipment within coverage of the second MME pool.

With reference to the first aspect or one of the first to fifth possible implementations of the first aspect, in a sixth possible implementation of the first aspect, the off-loading, by the first MME, the user equipment includes: within a preset network adjustment time period, off-loading the user equipment when the user equipment is user equipment within coverage of the second MME pool and the second MME pool returns to a normal state.

According to a second aspect, an apparatus for managing user equipment is provided, and is applied to a first mobility management entity (MME), where the first MME is located in a first MME pool, the first MME pool is a backup MME pool of a second MME pool, and when a fault occurs in the second MME pool, user equipment within coverage of the second MME pool accesses the first MME pool. The apparatus includes: a determining unit, configured to determine whether user equipment accessing the first MME is the user equipment within coverage of the second MME pool; and an off-loading unit, configured to off-load the user equipment when the user equipment is the user equipment within coverage of the second MME pool and the second MME pool returns to a normal state, wherein the off-loading refers to releasing an S1 connection and an radio resource control, RRC, connection between the first MME and the user equipment.

In a first possible implementation of the second aspect, the determining unit determines, according to tracking area information registered by the user equipment, whether the user equipment is user equipment within coverage of the second MME pool.

With reference to the first possible implementation of the second aspect, in a second possible implementation of the second aspect, the apparatus further includes: a receiving unit, configured to receive tracking area information reported by a base station and the tracking area information registered by the user equipment and reported by the user equipment, where the user equipment is within coverage of the base station; and the determining unit is specifically configured to: when the tracking area information reported by the base station is consistent with the tracking area information registered by the user equipment, determine that the user equipment is user equipment within coverage of the second MME pool.

With reference to the first or second possible implementation of the second aspect, in a third possible implementation of the second aspect, the tracking area information registered by the user equipment is a tracking area identity (TAI) or tracking area code (TAC).

With reference to the second aspect, in a fourth possible implementation of the second aspect, the apparatus further includes: an allocating unit, configured to: when the user equipment accesses the first MME from an S1 link between a base station within coverage of the second MME pool and the first MME, allocate a subscriber identity to the user equipment, where the subscriber identity includes a flag, and a value of the flag is a preset value; and the determining unit is specifically configured to: when the flag in the subscriber identity is the preset value, determine that the user equipment is user equipment within coverage of the second MME pool.

With reference to the second aspect, in a fifth possible implementation of the second aspect, the apparatus further includes: an allocating unit, configured to: when the user equipment accesses the first MME from an S1 link between a base station within coverage of the second MME pool and the first MME, allocate a subscriber identity to the user equipment, where the subscriber identity includes an M-TMSI, and a value of the M-TMSI is within a preset number segment; and the determining unit is specifically configured to: when the value of the M-TMSI in the subscriber identity is within the preset number segment, determine that the user equipment is user equipment within coverage of the second MME pool.

With reference to the second aspect or one of the first to fifth possible implementations of the second aspect, in a sixth possible implementation of the second aspect, the off-loading unit off-loads the user equipment by using a load re-balancing procedure; or the off-loading unit off-loads the user equipment by executing a detach operation on the user equipment.

With reference to the second aspect or one of the first to sixth possible implementations of the second aspect, in a seventh possible implementation of the second aspect, the off-loading unit is configured to off-load the user equipment when the user equipment is user equipment within coverage of the second MME pool and the first MME receives a notification message, where the notification message is sent by a second MME in the second MME pool and is used for notifying that the second MME pool returns to the normal state.

With reference to the second aspect or one of the first to sixth possible implementations of the second aspect, in an eighth possible implementation of the second aspect, the apparatus further includes: a detecting unit, configured to detect whether a link between the first MME and a second MME is normal, where the second MME is located in the second MME pool; and the off-loading unit is configured to off-load the user equipment when the user equipment is user equipment within coverage of the second MME pool and the detecting unit detects that the link between the first MME and the second MME is normal.

According to a third aspect, a computer program product is provided, including a computer readable medium, where the computer readable medium includes a group of program code used for executing the method according to the first aspect or any one of the implementations of the first aspect.

It can be seen that in the forgoing method and apparatus, a first MME pool is a backup MME pool of a second MME pool, and when a fault occurs in the second MME pool, a UE within coverage of the second MME pool accesses the first MME pool. An MME in the first MME pool may use the foregoing method to determine whether the UE accessing the MME is from the second MME pool and off-load the UE which is from the second MME pool when the second MME pool returns to normal. In this way, in an RRC establishment procedure, the UE no longer adds information about the MME in the first MME pool to an RRC connection request, so that an eNB may select an MME in the second MME pool for the UE according to a policy of the eNB and establish an S1-MME connection. It can be seen that by using the foregoing method, the UE migrated from the second MME pool to the first MME pool is able to return to the second MME pool, thereby solving a problem that a UE fails to be migrated from a backup MME pool to a local MME pool.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is an architectural diagram of an LTE/SAE network system in the prior art;
FIG. 2 is a schematic diagram of a communications system according to an embodiment of the present invention;
FIG. 3 is a flowchart of a method for managing a UE according to Embodiment 1 of the present invention;
FIG. 4 is a flowchart of a method for managing a UE according to Embodiment 2 of the present invention;
FIG. 5 is a schematic diagram illustrating an application scenario of a method for managing a UE according to Embodiment 3 of the present invention;
FIG. 6 is a signal flow of a method for managing a UE according to Embodiment 3 of the present invention;
FIG. 7 is a flowchart of a method for managing a UE according to Embodiment 6 of the present invention;
FIG. 8 is a flowchart of a method for managing a UE according to Embodiment 7 of the present invention;
FIG. 9 is a flowchart of a method for managing a UE according to Embodiment 8 of the present invention;
FIG. 10 is a flowchart of a method for managing a UE according to Embodiment 9 of the present invention;
FIG. 11 is a schematic structural diagram of an apparatus for managing a UE according to Embodiment 10 of the present invention;
FIG. 12 is a schematic structural diagram of another apparatus for managing a UE according to Embodiment 10 of the present invention;
FIG. 13 is a schematic structural diagram of still another apparatus for managing a UE according to Embodiment 10 of the present invention;
FIG. 14 is a schematic structural diagram of still another apparatus for managing a UE according to Embodiment 10 of the present invention;
FIG. 15 is a schematic structural diagram of an MME according to Embodiment 11 of the present invention; and
FIG. 16 is a schematic structural diagram of another MME according to Embodiment 11 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention.

At present, when a fault occurs in a local MME pool, an eNB within coverage of the local MME pool selects an MME in a backup MME pool according to a policy and establishes an S1-MME connection. The selected MME allocates an SAE-temporary mobile subscriber identity (SAE-temporary mobile subscriber identity, S-TMSI) or a globally unique temporary identity (globally unique temporary identity, GUTI) to a UE, where the S-TMSI or the GUTI includes information about the MME; for example, the S-TMSI includes MME code (MME code, MMEC), and the GUTI includes a globally unique MME identity (globally unique MME identity, GUMMEI). Every time the UE initiates a radio resource control (radio resource control, RRC) connection request, the UE adds the information about the MME (the MMEC or the GUMMEI) to this request, and the eNB determines a corresponding MME as a serving MME according to the added information about the MME. Therefore, as long as a tracking area (tracking area, TA) registered by the UE does not change, every time the UE initiates an RRC connection, the eNB selects the foregoing selected MME in the backup MME pool as a serving MME. In this way, the UE cannot return to the local MME pool, thereby causing a UE migration failure.

Considering the foregoing problem, the following embodiments enable an MME in a backup MME pool to recognize a UE migrated from a local MME pool; and when the MME finds that the local MME pool returns to normal, the MME off-loads the UE. In this way, an eNB may select an MME in the local MME pool for the UE according to a policy, so that the UE can be migrated back to the local MME pool.

In the following description, an MME in a backup MME pool is referred to as a backup MME, and an MME in a local MME pool is referred to as a local MME.

It should be noted that the backup MME pool and the local MME pool are generally geographically separated by a certain distance. In this case, the backup MME pool is also referred to as a remote MME pool (remote MME pool), and a corresponding backup MME is also referred to as a remote MME (remote MME).

Moreover, functions of the local MME pool and the backup MME pool are interchangeable, and functions of the local MME and the backup MME are also interchangeable. For UEs within coverage of different MME pools, their local MME pools and backup MME pools are different. For example, in FIG. 2, for a UE within coverage of an eNB210, a local MME pool is an MME pool 220, and a backup MME pool is an MME pool 230; and for a UE within coverage of an eNB240, a local MME pool is the MME pool 230, and a backup MME pool is the MME pool 220. The foregoing describes a case in which MME pools provide backup for each other; however, the embodiments of the present invention are not meant to be limited to this case; the MME pool 230 may be a backup of the MME pool 220, and another MME pool may be a backup of the MME pool 230.

In addition, an MME pool may include only one MME; for example, there may be cases where each of the MME pools in FIG. 2 includes only one MME, and the two MMEs may provide mutual backup, or one MME is a backup of the other MME.

It should be noted that in the embodiments of this application, when a fault occurs in an MME pool, it means that all MMEs in the MME pool cannot provide a service for UEs within coverage of the MME pool; and when an MME pool returns to normal or is in a normal state, it means that at least one MME in the MME pool can provide a service for UEs within coverage of the MME pool.

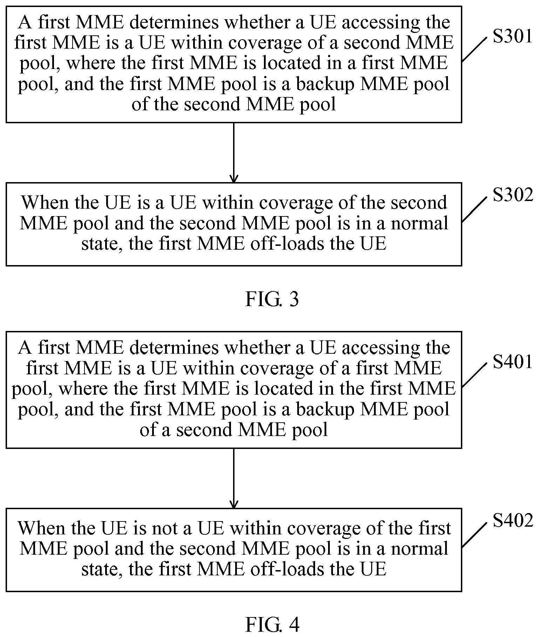

FIG. 3 is a flowchart of a method for managing a UE according to Embodiment 1 of the present invention. As shown in FIG. 3, the method includes the following steps:
S301: A first MME determines whether a UE accessing the first MME is a UE within coverage of a second MME pool, where the first MME is located in a first MME pool, and the first MME pool is a backup MME pool of the second MME pool.
S302: When the UE is a UE within coverage of the second MME pool and the second MME pool is in a normal state, the first MME off-loads the UE.

It can be seen that the first MME pool is a backup MME pool of the second MME pool, and when a fault occurs in the second MME pool, a UE within coverage of the second MME pool accesses the first MME pool. An MME in the first MME pool may use the foregoing method to determine whether the UE accessing the MME is from the second MME pool and off-load the UE which is from the second MME pool when the second MME pool returns to normal. In this way, in an RRC establishment procedure, the UE no longer adds information about the MME in the first MME pool to an RRC connection request, so that an eNB may select an MME in the second MME pool for the UE according to a policy of the eNB and establish an S1-MME connection. It can be seen that by using the foregoing method, the UE migrated from the second MME pool to the first MME pool is able to return to the second MME pool, thereby solving a problem that a UE fails to be migrated from a backup MME pool to a local MME pool.

It should be noted that the off-loading (off-load) in this embodiment and the following embodiments refers to releasing an S1 connection and an RRC connection between an MME and a UE. In addition, when the second MME pool returns to normal, the first MME may instantly off-load the UE within coverage of the second MME pool, or may set a network adjustment time period and off-load the UE within the time period. The network adjustment time period may a time period with relatively light traffic, for example, after 12 o'clock at night, and may specifically be set based on different areas, so as to ensure good user experience. In this embodiment, the foregoing step S302 is executed within the network adjustment time period. An off-loading procedure in all the following embodiments may be performed within the network adjustment time period, which will not be described again.

In addition, the policy for the eNB to select an MME for the UE may be an MME selection scheme based on a priority, a network topology, or the like, which is apparent to a person skilled in the art and details are not described herein again.

FIG. 4 is a flowchart of a method for managing a UE according to Embodiment 2 of the present invention. As shown in FIG. 4, the method includes the following steps:
S401: A first MME determines whether a UE accessing the first MME is UE within coverage of a first MME pool, where the first MME is located in the first MME pool, and the first MME pool is a backup MME pool of a second MME pool.
S402: When the UE is not a UE within coverage of the first MME pool and the second MME pool is in a normal state, the first MME off-loads the UE.

The foregoing method is applicable to a case in which the first MME pool provides backup for only one second MME pool (that is, provides no backup for any other MME pool). In this case, when the UE is not a UE within coverage of the first MME pool, the UE is a UE within coverage of the second MME pool. Therefore, when the second MME pool operates normally, the UE which is not within coverage of the first MME pool is off-loaded.

Furthermore, the foregoing method is also applicable to a case in which the first MME pool provides backup for a plurality of MME pools, that is, a plurality of second MME pools exist. In this case, when all second MME pools operate normally, the MME in the first MME pool off-loads the UE which is not with coverage of the first MME pool.

It can be seen that an MME in the first MME pool in this embodiment may use the foregoing method to determine whether a UE accessing the MME is a UE with coverage of the first MME pool; and when the second MME pool returns to normal, the UE which is not within coverage of the first MME pool is off-loaded. In this way, in an RRC establishment procedure, the UE no longer adds information about the MME in the first MME pool to an RRC connection request, so that an eNB may select a corresponding MME in the second MME pool for the UE according to a policy of the eNB and establish an S1-MME connection. It can be seen that by using the foregoing method, the UE migrated from the second MME pool to the first MME pool is able to return to the second MME pool, thereby solving a problem that user equipment fails to be migrated from a backup MME pool to a local MME pool.

In the foregoing embodiments, a first MME may distinguish whether a UE accessing the first MME is a local UE (that is, a UE within coverage of a first MME pool) or a remote migrated UE (that is, a UE within coverage of a second MME pool) according to TA information registered by the UE, or according to a flag that is added to an identity allocated to the UE, or according to identity content that varies depending on whether the UE that is allocated the identity is a local UE or a remote migrated UE. The following gives a detailed description by using specific examples.

### Embodiment 3

In this embodiment, TA information registered by a UE is used to distinguish whether the UE accessing a first MME is a local UE or a remote migrated UE.

In this case, the foregoing step S301 in which a first MME determines whether a UE accessing the first MME is a UE within coverage of a second MME pool includes: determining whether the UE is a UE within coverage of the second MME pool according to TA information registered by the UE.

Specifically, the UE may report the TA information registered by the UE to the first MME by using an S1 interface message. For example, in an attach procedure, the UE reports the TA information registered by the UE to the first MME by using an attach request (attach request) message. In addition, when an eNB establishes an S1-MME connection with the first MME, the eNB may report information about a TA in which the eNB is located to the first MME, for example, the eNB may report the TA information to the first MME by using an S1 Application Protocol (S 1 Application Protocol, S1AP) message in an S1 handover procedure. In this way, the first MME may compare the TA information reported by the UE with the TA information reported by the eNB, and determine from which S1 link the UE is handed over, thereby determining whether the UE is a UE within coverage of the second MME pool.

It should be noted that the UE may report the TA information by using procedures such as tracking area update (tracking area update, TAU) besides the attach (attach) procedure, on which this embodiment of the present invention does not impose any limitation. In addition, this embodiment of the present invention also does not impose any limitation on a process of reporting the TA information by the eNB.

The tracking area information (including the TA information registered by the UE and the TA information reported by the base station) may be a tracking area identity (tracking area identity, TAI) or a tracking area code (tracking area code, TAC).

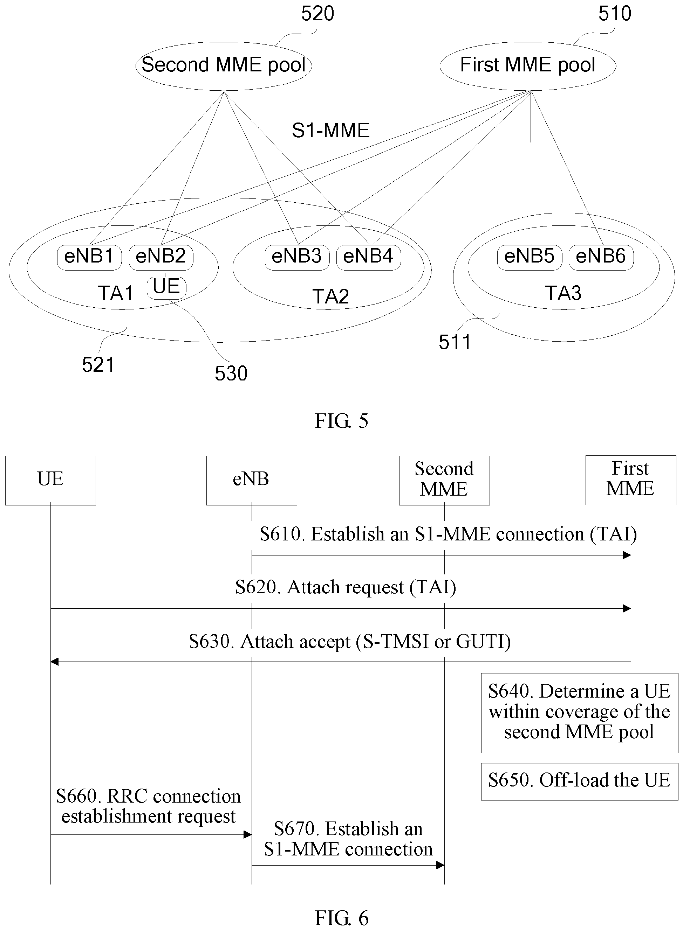

FIG. 5 is a schematic diagram illustrating an application scenario of a method for managing a UE according to Embodiment 3 of the present invention. As shown in FIG. 5, a first MME pool 510, which provides a backup for a second MME pool 520, and the second MME pool 520 are geographically separated by a certain distance. A tracking area TA3 is within coverage 511 of the first MME pool 510, and base stations eNB5 and eNB6 are deployed in the tracking area TA3. Tracking areas TA1 and TA2 are within coverage 521 of the second MME pool 520, base stations eNB1 and eNB2 are deployed in the tracking area TA1, and base stations eNB3 and eNB4 are deployed in the tracking area TA2. Because the first MME pool 510 and the second MME pool 520 are geographically separated, the tracking area TA3 of the first MME pool 510 is different from the tracking areas TA1 and TA2 of the second MME pool 520. Therefore, a UE may be distinguished according to tracking area information.

With reference to FIG. 5 and a signal flow shown in FIG. 6, the following describes in detail the method for managing a UE in this embodiment.

For example, a UE 530 within coverage 521 of the second MME pool registers in the tracking area TA1 and accesses the second MME pool 520 through the base station eNB2. When a fault occurs in the second MME pool 520, the base station eNB2 selects an MME in the first MME pool 510 according to a policy of the base station eNB2, for example, according to the policy that the MME to be selected is the foregoing first MME, and establishes an S1-MME connection with the first MME (S610). In an S1-MME connection establishment procedure, the eNB2 reports TA information (a TAI is used as an example herein) about the TA1 in which the eNB2 is located to the first MME. Then, when the UE 530 accesses the first MME, the UE 530 reports, by using an S1 interface message, a TAI of the TA registered by the UE 530 (S620); and the first MME allocates a UE identity to the UE 530 (S630), such as an S-TMSI or a GUTI, where the allocated UE identity includes information about the first MME, such as an MMEC or a GUMMEI. Using an attach procedure as an example, step S620 is a process of sending an attach request (attach request) message, where the attach request message carries the TAI; and step S630 is a process of sending an attach accept (attach accept) message, where the attach accept message carries an S-TMSI or a GUTI.

When the second MME pool 520 returns to normal, because the TAs of the first MME pool 510 and the second MME pool 520 are different, the first MME may recognize, according to the TAI reported by the UE 530, the UE 530 migrated from the first MME pool 510 (S640), and off-load the UE 530 (S650). After an S1 and an RRC connection are released, the off-loaded UE 530 initiates an RRC connection establishment request (S660). In this case, in the RRC establishment procedure, the UE 530 no longer adds the MMEC or GUMMEI information to an RRC connection request, and the base station eNB2 may select an MME in the second MME pool for the UE 530 according to a policy of the eNB2, and establish an S1-MME connection (S670), thereby implementing successful migration of the UE from a backup MME pool to a local MME pool.

It should be noted that when it is distinguished, according to the TA information registered by the UE, whether the UE accessing the first MME is local UE or emote migrated UE, step S401 in the foregoing Embodiment 2 in which a first MME determines whether a UE accessing the first MME is a UE within coverage of a first MME pool includes: determining whether the UE is a UE within coverage of the first MME pool according to the TA information registered by the UE.

Because the first MME may know TA information of the first MME pool, the first MME may determine whether the UE is a UE within coverage of the first MME pool by comparing the TA information reported by the UE and the TA information of the first MME pool.

### Embodiment 4

In this embodiment, when a first MME allocates an identity to a UE, the first MME adds a flag to the identity, so as to distinguish whether the UE accessing the first MME is local UE or remote migrated UE.

Specifically, when the UE accesses the first MME, the first MME adds a flag to a subscriber identity allocated to the UE, so as to identify whether the UE is user equipment within coverage of a second MME pool, or identify whether the UE accesses the first MME through an S1 link between a base station within coverage of a second MME pool and the first MME. For example, if the UE accesses the first MME through an S1 link between a base station within coverage of the second MME pool and the first MME, the flag is set to "1"; otherwise, the flag is set to "0".

In this way, when the second MME pool returns to normal, the first MME may off-load, according to the flag in the subscriber identity of the user equipment accessing the first MME, the UE migrated from the second MME pool.

For example, the first MME may allocate the subscriber identity to the UE in an attach request or in a TAU procedure. In addition, the allocated subscriber identity is the same as that in the foregoing embodiments, and may be an S-TMSI or a GUTI.

This embodiment does not limit the number of bits in a flag; however, 1 bit is generally sufficient to serve the purpose. Using an S-TMSI as an example, the S-TMSI is formed by an MMEC and an MME mobile subscriber identity (MME mobile subscriber identity, M-TMSI). A dedicated bit in the M-TMSI may be used as the flag, to distinguish from which S1 link the UE comes.

This embodiment may be combined with the foregoing Embodiment 1, and in this case, the foregoing method for managing a UE further includes:
when the UE accesses the first MME, allocating a subscriber identity to the UE, where the subscriber identity includes a flag; if the UE accesses the first MME through an S1 link between a base station within coverage of the second MME pool and the first MME, setting the flag to a preset value; and
correspondingly, the foregoing step S301 in which a first MME determines whether a UE accessing the first MME is a UE within coverage of a second MME pool includes:
   determining whether the flag in the subscriber identity is the preset value; and
   if the flag is the preset value, determining that the UE is a UE within coverage of the second MME pool.

Correspondingly, the foregoing step S302 is executed to off-load the UE.

This embodiment may be combined with the foregoing Embodiment 2, and in this case, the foregoing method for managing a UE further includes:
when the UE accesses the first MME, allocating a subscriber identity to the UE, where the subscriber identity includes a flag; if the UE accesses the first MME through an S1 link between a base station within coverage of the second MME pool and the first MME, setting the flag to a preset value; and
correspondingly, the foregoing step S401 in which a first MME determines whether a UE accessing the first MME is a UE within coverage of a first MME pool includes:
   determining whether the flag in the subscriber identity is the preset value; and
   if the flag is the preset value, determining that the UE is not a UE within coverage of the first MME pool.

Correspondingly, the foregoing step S402 is executed to off-load the UE.

### Embodiment 5

In this embodiment, when a first MME allocates an identity to a UE, the first MME may also use different content of the identity to distinguish whether the UE accessing the first MME is local UE or remote migrated UE.

For example, the first MME may allocate a dedicated M-TMSI segment to UEs migrated from a second MME pool, so as to distinguish whether the UE accessing the first MME is local UE or remote migrated UE.

For example, an M-TMSI has 32 bits, of which 0 to 2ⁿ may be allocated to local UE accessing the first MME, where 0<n<32, and 2ⁿ⁺¹ to 2³²⁻ⁿ are allocated to remote migrated UE accessing the first MME. In this way, the first MME may determine, according to the M-TMSI, whether the UE accessing the first MME is a UE within coverage of the second MME pool.

This embodiment may be combined with the foregoing Embodiment 1, and in this case, the foregoing method for managing a UE further includes:
when the UE accesses the first MME, allocating a subscriber identity to the UE, where the subscriber identity includes an M-TMSI; if the UE accesses the first MME through an S1 link between a base station within coverage of the second MME pool and the first MME, a value of the M-TMSI is within a preset number segment; and
correspondingly, the foregoing step S301 in which a first MME determines whether a UE accessing the first MME is a UE within coverage of a second MME pool includes:
   determining whether the value of the M-TMSI in the subscriber identity is within the preset number segment; and
   if the value of the M-TMSI is within the preset number segment, determining that the UE is a UE within coverage of the second MME pool.

Correspondingly, the foregoing step S302 is executed to off-load the UE.

This embodiment may be combined with the foregoing Embodiment 2, and in this case, the foregoing method for managing a UE further includes:
when the UE accesses the first MME, allocating a subscriber identity to the UE, where the subscriber identity includes an M-TMSI; if the UE accesses the first MME through an S1 link between a base station within coverage of the second MME pool and the first MME, a value of the M-TMSI is within a preset number segment; and
correspondingly, the foregoing step S401 in which a first MME determines whether a UE accessing the first MME is a UE within coverage of a first MME pool includes:
   determining whether the value of the M-TMSI in the subscriber identity is within the preset number segment; and
   if the value of the M-TMSI is within the preset number segment, determining that the UE is not a UE within coverage of the first MME pool.

Correspondingly, the foregoing step S402 is executed to off-load the UE.

It should be noted that in the foregoing embodiments, off-loading the UE may be implemented by using a load re-balancing procedure or a detach procedure. The following gives a description with reference to Embodiment 6 and Embodiment 7, and Embodiment 6 and Embodiment 7 may be combined with any one of the foregoing embodiments.

### Embodiment 6: off-loading UE by means of load re-balancing procedure

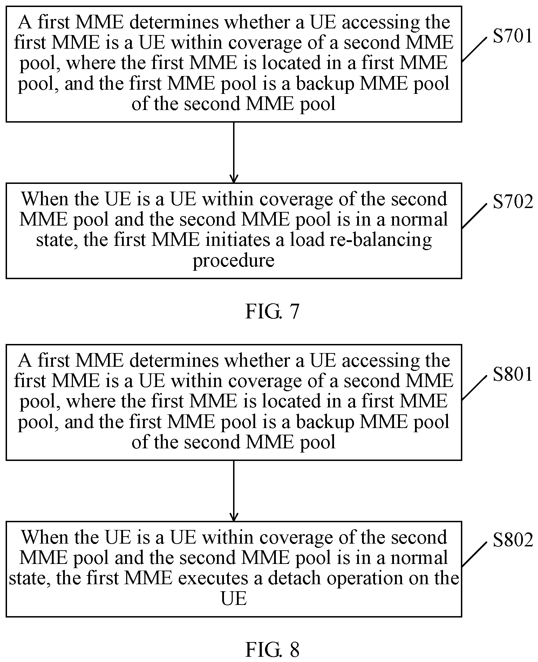

FIG. 7 is a flowchart of a method for managing a UE according to Embodiment 6 of the present invention. As shown in FIG. 7, the method includes the following steps:
S701: A first MME determines whether a UE accessing the first MME is a UE within coverage of a second MME pool, where the first MME is located in a first MME pool, and the first MME pool is a backup MME pool of the second MME pool.
S702: When the UE is a UE within coverage of the second MME pool and the second MME pool is in a normal state, the first MME initiates a load re-balancing (load re-balancing) procedure.

By means of the load re-balancing procedure, an S1 connection and an RRC connection between the UE and the MME may be released; and after the S1 connection and the RRC connection are released, the UE initiates a TAU procedure. In this case, in an RRC establishment procedure, the UE no longer adds S-TMSI or GUMMEI information to an RRC connection request, and an eNB may select an MME in the first MME pool for the UE according to a policy of the eNB, and establish an S1-MME connection.

### Embodiment 7: off-loading UE by means of detach procedure

FIG. 8 is a flowchart of a method for managing a UE according to Embodiment 7 of the present invention. As shown in FIG. 8, the method includes the following steps:
S801: A first MME determines whether a UE accessing the first MME is a UE within coverage of a second MME pool, where the first MME is located in a first MME pool, and the first MME pool is a backup MME pool of the second MME pool.
S802: When the UE is a UE within coverage of the second MME pool and the second MME pool is in a normal state, the first MME executes a detach (detach) operation on the UE.

After the detach operation is executed on the UE, an S1 connection and an RRC connection between the UE and the MME may be released; and after the S1 connection and the RRC connection are released, the UE initiates a TAU procedure. In this case, in an RRC establishment procedure, the UE no longer adds S-TMSI or GUMMEI information to an RRC connection request, and an eNB may select an MME in the first MME pool for the UE according to a policy of the eNB, and establish an S1-MME connection.

It should be noted that in the foregoing embodiments, a method for triggering the first MME to off-load the UE may be: after the second MME pool returns to normal, manually executing a command to trigger the first MME to off-load the UE which is from the second MME pool. The method may also be: using an interface message between MMEs to trigger the first MME to off-load the UE; that is, the second MME pool notifies the first MME in time when a state of the second MME pool changes; in this way, when the second MME pool returns to normal, the first MME may proactively initiate a load re-balancing procedure or a detach procedure to off-load the UE which is from the second MME pool. The method may also be: periodically detecting, by MMEs, a state of a link (S10 link) between the MMEs, and triggering, according to the state of the link, the first MME to off-load the UE which is from the second MME pool. For example, when the first MME detects that an S10 link between the first MME and a second MME in the second MME pool changes from a faulty state to a normal state, the first MME proactively initiates a load re-balancing procedure or a detach procedure to off-load the UE which is from the second MME pool. The following gives a description with reference to Embodiment 8 and Embodiment 9, and Embodiment 8 and Embodiment 9 may be combined with any one of the foregoing embodiments.

### Embodiment 8

An interface message between MMEs is used to trigger a first MME to off-load a UE, that is, a second MME pool notifies the first MME in time when a state of the second MME pool changes. In this way, when the second MME pool returns to normal, the first MME may proactively initiate a load re-balancing procedure or a detach procedure to off-load the UE which is from the second MME pool.

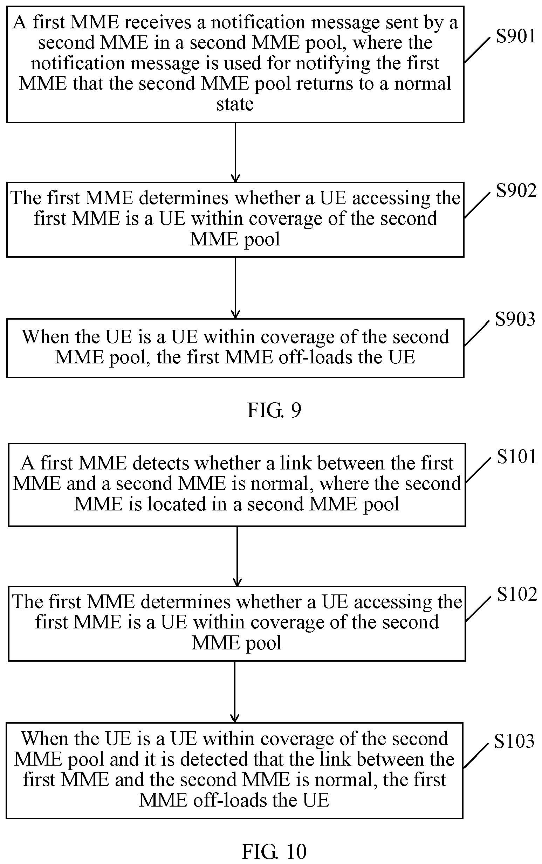

FIG. 9 is a flowchart of a method for managing a UE according to Embodiment 8 of the present invention. As shown in FIG. 9, the method includes the following steps:
S901: A first MME receives a notification message sent by a second MME in a second MME pool, where the notification message is used for notifying the first MME that the second MME pool returns to a normal state.
S902: The first MME determines whether a UE accessing the first MME is a UE within coverage of the second MME pool.
S903: When the UE is a UE within coverage of the second MME pool, the first MME off-loads the UE.

The foregoing steps S902 and S903 may be replaced by steps S402 and S403 in Embodiment 2, and details are not described herein again.

### Embodiment 9

MMEs periodically detect a state of a link (S10 link) between them, and off-loading a UE which is from a second MME pool is triggered according to the state of the link.

FIG. 10 is a flowchart of a method for managing a UE according to Embodiment 9 of the present invention. As shown in FIG. 10, the method includes the following steps:
S101: A first MME detects whether a link between the first MME and a second MME is normal, where the second MME is located in a second MME pool.
S102: The first MME determines whether a UE accessing the first MME is a UE within coverage of the second MME pool.
S103: When the UE is a UE within coverage of the second MME pool and it is detected that the link between the first MME and the second MME is normal, the first MME off-loads the UE.

It should be noted that the foregoing second MME does not refer to a particular MME but refers to an MME in the second MME pool in a general sense. Moreover, the first MME may detect, periodically or in response to triggering of an event, whether the link between the first MME and the second MME is normal; or the two manners may be combined. For example, when the first MME determines that UE accessing the first MME include a UE within coverage of the second MME pool, the first MME starts to periodically detect whether the foregoing link is normal. This embodiment may also be combined with Embodiment 8. The second MME sends a notification message to notify a change in a state of the second MME; and when learning, according to the notification message, that a fault occurs in the second MME pool, the first MME starts to periodically detect whether the foregoing link is normal.

The foregoing steps S102 and S103 may be replaced by steps S402 and S403 in Embodiment 2, and details are not described herein again.

### Embodiment 10

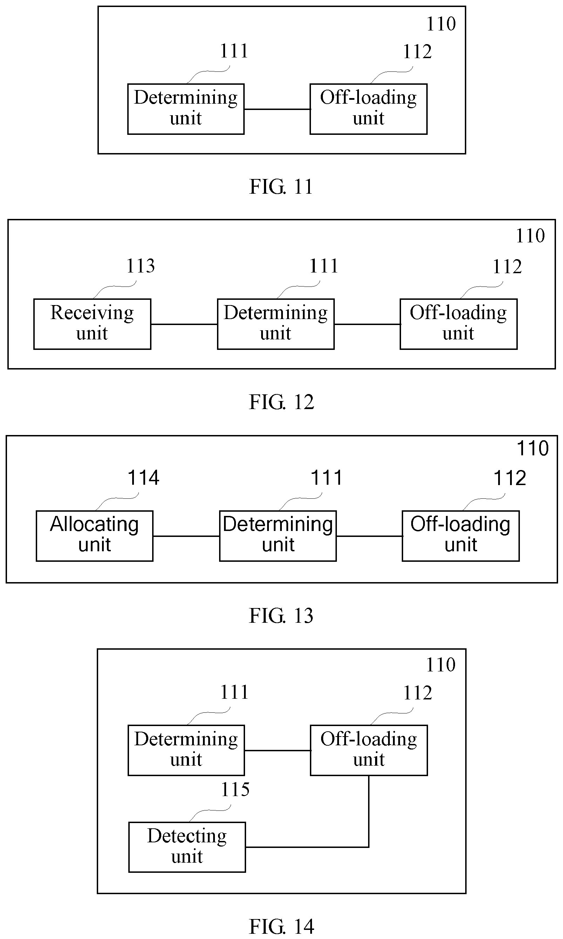

FIG. 11 is a schematic structural diagram of an apparatus for managing a UE according to Embodiment 10 of the present invention. The apparatus 110 is applied to a first MME and is configured to execute any one of the methods according to Embodiment 1 to Embodiment 9. The first MME is located in a first MME pool, and the first MME pool is a backup MME pool of a second MME pool. As shown in FIG. 11, the apparatus 110 includes a determining unit 111 and an off-loading unit 112, where the determining unit 111 is configured to determine whether a UE accessing the first MME is a UE within coverage of the second MME pool; and the off-loading unit 112 is configured to off-load the UE when the UE is a UE within coverage of the second MME pool and the second MME pool is in a normal state.

It can be seen that the first MME pool is a backup MME pool of the second MME pool, and when a fault occurs in the second MME pool, a UE within coverage of the second MME pool accesses the first MME pool. An MME in the first MME pool may use the foregoing apparatus 110 to determine whether the UE accessing the MME is from the second MME pool and off-load the UE which is from the second MME pool when the second MME pool returns to normal. In this way, in an RRC establishment procedure, the UE no longer adds information about the MME in the first MME pool to an RRC connection request, so that an eNB may select an MME in the second MME pool for the UE according to a policy of the eNB and establish an S1-MME connection. It can be seen that by using the foregoing method, the UE migrated from the second MME pool to the first MME pool is able to return to the second MME pool, thereby solving a problem that a UE fails to be migrated from a backup MME pool to a local MME pool.

Like in the foregoing Embodiment 3, the determining unit 111 may specifically determine whether the UE is a UE within coverage of the second MME pool according to TA information registered by the UE.

In this case, as shown in FIG. 12, the foregoing apparatus 110 may further include a receiving unit 113, configured to receive TA information reported by a base station and the TA information registered by the UE and reported by the UE, where the user equipment is within coverage of the base station; and the determining unit 111 is specifically configured to: when the TA information reported by the base station is consistent with the TA information registered by the UE, determine that the UE is a UE within coverage of the second MME pool. In this way, the off-loading unit 112 may off-load the UE.

The foregoing TA information includes the TA information registered by the UE and the TA information reported by the base station, and may be a TAI or a TAC.

Like in the foregoing Embodiment 4, the determining unit 111 may determine whether the UE is a UE within coverage of the second MME pool according to a subscriber identity of the UE.

In this case, as shown in FIG. 13, the foregoing apparatus 110 may further include an allocating unit 114, configured to: when the UE accesses the first MME through an S1 link between a base station within coverage of the second MME pool and the first MME, allocate a subscriber identity to the UE, where the subscriber identity includes a flag, and a value of the flag is a preset value; and the determining unit 111 is specifically configured to: when the flag in the subscriber identity is the preset value, determine that the UE is a UE within coverage of the second MME pool.

Like in the foregoing Embodiment 5, in another embodiment, the allocating unit 114 may be configured to: when the UE accesses the first MME through an S1 link between a base station within coverage of the second MME pool and the first MME, allocate a subscriber identity to the UE, where the subscriber identity includes an M-TMSI, and a value of the M-TMSI is within a preset number segment; and the determining unit 111 is specifically configured to: when the value of the M-TMSI in the subscriber identity is within the preset number segment, determine that the UE is a UE within coverage of the second MME pool.

Optionally, like in the foregoing Embodiment 6, the off-loading unit 112 may off-load the UE by using a load re-balancing procedure.

Optionally, like in the foregoing Embodiment 7, the off-loading unit 112 may off-load the UE by executing a detach operation on the UE.

Moreover, a method for triggering the off-loading unit 112 to off-load the UE may be: after the second MME pool returns to normal, manually executing a command to trigger the off-loading unit 112 to off-load the UE which is from the second MME pool.

The method may also be: using an interface message between MMEs to trigger the off-loading unit 112 to off-load the UE, that is, the second MME pool notifies the first MME in time when a state of the second MME pool changes. In this way, when the second MME pool returns to normal, the off-loading unit 112 may proactively initiate a load re-balancing procedure or a detach procedure to off-load the UE which is from the second MME pool. In this case, the off-loading unit 112 is configured to off-load the UE when the UE is a UE within coverage of the second MME pool and the first MME receives a notification message, where the notification message is sent by a second MME in the second MME pool and is used for notifying that the second MME pool returns to the normal state.

The method may also be: periodically detecting, by MMEs, a state of a link (S10 link) between the MMEs, and triggering, according to a state of the link, the off-loading unit 112 to off-load the UE which is from the second MME pool. For example, when the first MME detects that an S10 link between the first MME and a second MME in the second MME pool changes from a faulty state to a normal state, the off-loading unit 112 proactively initiates a load re-balancing procedure or a detach procedure to off-load the UE which is from the second MME pool. In this case, as shown in FIG. 14, the foregoing apparatus 110 may further include a detecting unit 115, configured to detect whether a link between the first MME and the second MME is normal, where the second MME is located in the second MME pool; the off-loading unit 112 is specifically configured to off-load the UE when the UE is a UE within coverage of the second MME pool and the detecting unit 115 detects that the link between the first MME and the second MME is normal.

It should be noted that the foregoing determining unit 111 and the off-loading unit 112 may be implemented in a form of hardware independent of a processor of the MME, and may be implemented separately or together, and may be in a form of a microprocessor; or may be embedded into a processor of the MME in a form of hardware, and may also be stored in the processor of the MME in a form of software, so that the processor of the MME executes operations corresponding to the determining unit 111 and the off-loading unit 112. The receiving unit 113 may be an interface circuit of the MME, and the allocating unit 114 is implemented in a form same as the determining unit 111 or the off-loading unit 112, and may be integrated with the determining unit 111 and the off-loading unit 112, or be implemented separately. The detecting unit 115 may be implemented in a form same as the determining unit 111 or the off-loading unit 112, and may be integrated with the determining unit 111 and the off-loading unit 112, or be implemented separately; and may also be integrated in an interface circuit of the MME. This embodiment of the present invention does not impose any limitation on this. The foregoing processor may be a central processing unit (CPU), a microprocessor, a single-chip microcomputer, or the like.

### Embodiment 11

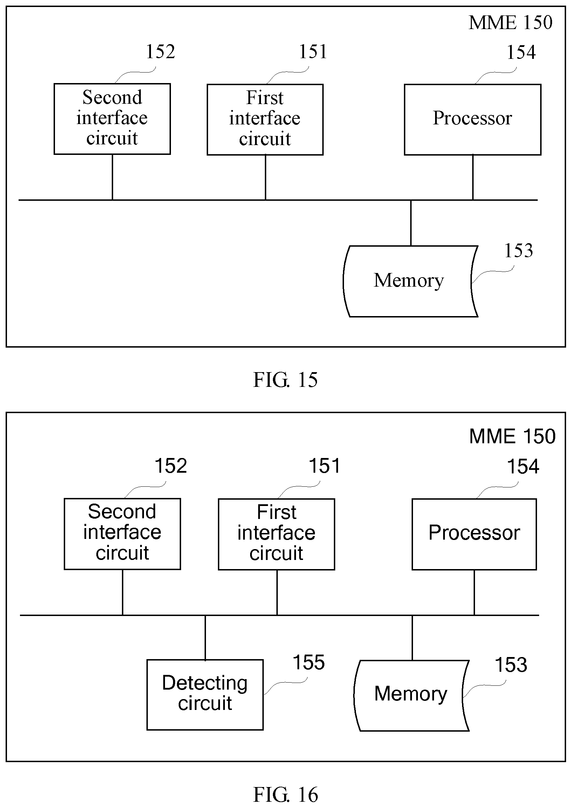

FIG. 15 is a schematic structural diagram of an MME according to Embodiment 11 of the present invention.

As shown in FIG. 15, the MME 150 includes a first interface circuit 151, a second interface circuit 152, a memory 153, and a processor 154 that is connected to the first interface circuit 151, the second interface circuit 152, and the memory 153. The first interface circuit 151 is configured to communicate with a base station, the second interface circuit 152 is configured to communicate with another MME, the memory 153 is configured to store information such as a parameter or program code required for an operation by the MME, and the processor 154 is configured to execute operations corresponding to the determining unit 111 and the off-loading unit 112.

For example, when the determining unit 111 and the off-loading unit 112 are stored in the memory 153 in a form of software, the memory 153 is configured to store a group of program code, the processor 154 is configured to invoke the program code stored in the memory 153, and execute the operations in Embodiment 1 or Embodiment 2, for example, including: determining whether a UE accessing a first MME is a UE within coverage of a second MME pool, where the first MME is located in a first MME pool, and the first MME pool is a backup MME pool of the second MME pool; and off-loading the UE when the UE is a UE within coverage of the second MME pool and the second MME pool is in a normal state.

For another example, when the determining unit 111 and the off-loading unit 112 are integrated in a form of hardware to form the processor 154, the processor is configured to execute the operations corresponding to the determining unit 111 and the off-loading unit 112.

Like in the foregoing Embodiment 3, the processor may specifically determine whether the UE is a UE within coverage of the second MME pool according to TA information registered by the UE. In this case, the first interface circuit 151 is configured to receive TA information reported by a base station and the TA information registered by the UE and reported by the UE, where the user equipment is within coverage of the base station; and the processor 154 is configured to determine whether the TA information reported by the base station is consistent with the TA information registered by the UE and reported by the UE, and off-load the UE when the TA information reported by the base station is consistent with the TA information registered by the UE.

Like in the foregoing Embodiment 4, the processor 154 may determine whether the UE is a UE within coverage of the second MME pool according to a subscriber identity of the UE. In this case, the processor 154 is further configured to allocate a subscriber identity to the UE, where the subscriber identity includes a flag, and when the UE accesses the first MME through an S1 link between a base station within coverage of the second MME pool and the first MME, a value of the flag is a preset value; and the processor 154 is further configured to determine whether the flag in the subscriber identity is the preset value, and off-load the UE when the flag in the subscriber identity is the preset value.

Like in the foregoing Embodiment 5, in another embodiment, the subscriber identity allocated by the processor 154 includes an M-TMSI, and when the UE accesses the first MME through an S1 link between a base station within coverage of the second MME pool and the first MME, a value of the M-TMSI is within a preset number segment; and the processor 154 is further configured to determine whether the value of the M-TMSI in the subscriber identity is within the preset number segment, and off-load the UE when the value of the M-TMSI in the subscriber identity is within the preset number segment.

Optionally, like in the foregoing Embodiment 6, the processor 154 may off-load the UE by using a load re-balancing procedure.

Optionally, like in the foregoing Embodiment 7, the processor 154 may off-load the UE by executing a detach operation on the UE.

Moreover, a method for triggering the processor 154 to off-load the UE may be: after the second MME pool returns to normal, manually executing a command to trigger the processor 154 to off-load the UE which is from the second MME pool.

The method may also be: using an interface message between MMEs to trigger the processor 154 to off-load the UE, that is, the second MME pool notifies the first MME in time when a state of the second MME pool changes. In this way, when the second MME pool returns to normal, the processor 154 may proactively initiate a load re-balancing procedure or a detach procedure to off-load the UE which is from the second MME pool. In this case, the processor 154 is configured to off-load the UE when the UE is a UE within coverage of the second MME pool and the second interface circuit 152 receives a notification message, where the notification message is sent by a second MME in the second MME pool and is used for notifying that the second MME pool returns to the normal state.

The method may also be: periodically detecting, by MMEs, a state of a link (S10 link) between the MMEs, and triggering, according to the state of the link, the processor 154 to off-load the UE which is from the second MME pool. For example, when the first MME detects that an S10 link between the first MME and a second MME in the second MME pool changes from a faulty state to a normal state, the processor 154 proactively initiates a load re-balancing procedure or a detach procedure to off-load the UE which is from the second MME pool. In this case, as shown in FIG. 16, the foregoing apparatus 150 may further include a detecting circuit 155, configured to detect whether a link between the first MME and the second MME is normal, where the second MME is located in the second MME pool; and the processor 154 is specifically configured to off-load the UE when the UE is a UE within coverage of the second MME pool and the detecting circuit 155 detects that the link between the first MME and the second MME is normal. The detecting circuit 155 may be implemented independently, or may be integrated in the second interface circuit 152.

Through the above description of the embodiments, a person skilled in the art can clearly understand that the present invention may be implemented by hardware, or firmware, or a combination thereof. When the present invention is implemented by software, the foregoing functions may be stored in a computer readable medium or transmitted as one or more instructions or code in a computer readable medium. The computer readable medium includes a computer storage medium and a communication medium, where the communication medium includes any medium convenient for transporting a computer program from one place to another; and the storage medium may be any available medium accessible by a computer. The following is an example, but the present invention is not limited thereto: the computer readable medium may include a RAM, a ROM, an EEPROM, a CD-ROM, or other storage mediums of an optical disc and a magnetic disk, or other magnetic storage devices, or any other medium capable of carrying or storing expected program code in a form of an instruction or a data structure and accessible by a computer. In addition, any connection may appropriately be the computer readable medium. For example, if the software is transmitted from a website, a server, or other remote sources by using a coaxial cable, an optical fiber and cable, a twisted pair, a digital subscriber line (DSL), or a wireless technology such as infrared, radio, or a microwave, the coaxial cable, optical fiber and cable, twisted pair, DSL, or the wireless technology such as infrared, radio, or a microwave are included in the definition of the medium. For example, a disk (Disk) and a disc (disc) used in the present invention include a compact disc (CD), a laser disc, an optical disc, a digital versatile disc (DVD), a floppy disk, and a blue-ray disc, where the disk usually copies data magnetically, and the disc copies data optically by using a laser. The foregoing combinations shall also fall within the protection scope of the computer readable medium.

## Claims

1. A method for managing user equipment, comprising:
determining (S301), by a first mobility management entity, MME, whether user equipment accessing the first MME is user equipment within coverage of a second MME pool, wherein the first MME is located in a first MME pool, and the first MME pool is a backup MME pool of the second MME pool, and when a fault occurs in the second MME pool, the user equipment within coverage of the second MME pool accesses the first MME pool; and
off-loading (S302), by the first MME, the user equipment when the user equipment is the user equipment within coverage of the second MME pool and the second MME pool returns to a normal state, wherein the off-loading refers to releasing an S1 connection and an radio resource control, RRC, connection between the first MME and the user equipment.

2. The method according to claim 1, wherein the determining (S301), by a first MME, whether user equipment accessing the first MME is user equipment within coverage of a second MME pool comprises:
determining (S640) whether the user equipment is user equipment within coverage of the second MME pool according to tracking area information registered by the user equipment.

3. The method according to claim 2, wherein before the determining (S640), by a first MME, whether user equipment accessing the first MME is user equipment within coverage of a second MME pool, the method further comprises:
receiving (S610) tracking area information reported by a base station, wherein the user equipment is within coverage of the base station; and
receiving (S620) the tracking area information registered by the user equipment and reported by the user equipment; and
the determining (S640), by a first MME, whether user equipment accessing the first MME is user equipment within coverage of a second MME pool comprises:
determining whether the tracking area information reported by the base station is consistent with the tracking area information registered by the user equipment; and
when the tracking area information reported by the base station is consistent with the tracking area information registered by the user equipment, determining that the user equipment is user equipment within coverage of the second MME pool.

4. The method according to claim 2 or 3, wherein the tracking area information registered by the user equipment is a tracking area identity, TAI, or a tracking area code, TAC.

5. The method according to claim 1, further comprising:
when the user equipment accesses the first MME through an S1 link between a base station within coverage of the second MME pool and the first MME, allocating a subscriber identity to the user equipment, wherein the subscriber identity comprises a flag, and a value of the flag is a preset value; and
the determining (S301), by a first MME, whether user equipment accessing the first MME is user equipment within coverage of a second MME pool comprises:
determining whether the flag in the subscriber identity is the preset value; and
if the flag is the preset value, determining that the user equipment is user equipment within coverage of the second MME pool.

6. The method according to claim 1, further comprising:
when the user equipment accesses the first MME through an S1 link between a base station within coverage of the second MME pool and the first MME, allocating a subscriber identity to the user equipment, wherein the subscriber identity comprises an M-TMSI, and a value of the M-TMSI is within a preset number segment; and
the determining (S301), by a first MME, whether user equipment accessing the first MME is user equipment within coverage of a second MME pool comprises:
determining whether the value of the M-TMSI in the subscriber identity is within the preset number segment; and
if the value of the M-TMSI is within the preset number segment, determining that the user equipment is user equipment within coverage of the second MME pool.

7. The method according to any one of claims 1 to 6, wherein the off-loading (S302), by the first MME, the user equipment comprises:
within a preset network adjustment time period, off-loading the user equipment when the user equipment is user equipment within coverage of the second MME pool and the second MME pool returns to the normal state.

8. An apparatus for managing user equipment, applied to a first mobility management entity, MME, wherein the first MME is located in a first MME pool, the first MME pool is a backup MME pool of a second MME pool, and when a fault occurs in the second MME pool, user equipment within coverage of the second MME pool accesses the first MME pool, wherein the apparatus comprises:
a determining unit (111), configured to determine whether user equipment accessing the first MME is the user equipment within coverage of the second MME pool; and
an off-loading unit (112), configured to off-load the user equipment when the user equipment is the user equipment within coverage of the second MME pool and the second MME pool returns to a normal state, wherein the off-loading refers to releasing an S1 connection and an radio resource control, RRC, connection between the first MME and the user equipment.

9. The apparatus according to claim 8, wherein the determining unit (111) determines whether the user equipment is user equipment within coverage of the second MME pool according to tracking area information registered by the user equipment.

10. The apparatus according to claim 9, further comprising:
a receiving unit (113), configured to receive tracking area information reported by a base station and the tracking area information registered by the user equipment and reported by the user equipment, wherein the user equipment is within coverage of the base station; and
the determining unit (111) is specifically configured to: when the tracking area information reported by the base station is consistent with the tracking area information registered by the user equipment, determine that the user equipment is user equipment within coverage of the second MME pool.

11. The apparatus according to claim 9 or 10, wherein the tracking area information registered by the user equipment is a tracking area identity, TAI, or a tracking area code, TAC.

12. The apparatus according to claim 11, further comprising:
an allocating unit (114), configured to: when the user equipment accesses the first MME through an S1 link between a base station within coverage of the second MME pool and the first MME, allocate a subscriber identity to the user equipment, wherein the subscriber identity comprises a flag, and a value of the flag is a preset value; and
the determining unit (111) is specifically configured to: when the flag in the subscriber identity is the preset value, determine that the user equipment is user equipment within coverage of the second MME pool.

13. The apparatus according to claim 11, further comprising:
an allocating unit (114), configured to: when the user equipment accesses the first MME through an S1 link between a base station within coverage of the second MME pool and the first MME, allocate a subscriber identity to the user equipment, wherein the subscriber identity comprises an M-TMSI, and a value of the M-TMSI is within a preset number segment; and
the determining unit (111) is specifically configured to: when the value of the M-TMSI in the subscriber identity is within the preset number segment, determine that the user equipment is user equipment within coverage of the second MME pool.

14. The apparatus according to any one of claims 8 to 13, wherein the off-loading unit (112) off-loads the user equipment by using a load re-balancing procedure; or
the off-loading unit (112) off-loads the user equipment by executing a detach operation on the user equipment.

15. The apparatus according to any one of claims 8 to 14, wherein the off-loading unit (112) is configured to: when the user equipment is user equipment within coverage of the second MME pool and the first MME receives a notification message, off-load the user equipment, wherein the notification message is sent by a second MME in the second MME pool and is used for notifying that the second MME pool returns to the normal state.

16. The apparatus according to any one of claims 8 to 14, further comprising:
a detecting unit (115), configured to detect whether a link between the first MME and a second MME is normal, wherein the second MME is located in the second MME pool; and
the off-loading unit (112) is configured to off-load the user equipment when the user equipment is user equipment within coverage of the second MME pool and the detecting unit (115) detects that the link between the first MME and the second MME is normal.

17. A computer program product, comprising a computer readable medium, wherein the computer readable medium comprises a group of program code, and is configured to execute the method according to any one of claims 1 to 7.

## Patentansprüche

1. Verfahren zum Managen eines Teilnehmergeräts, das Folgendes umfasst:
Bestimmen (S301) durch eine erste Mobilitätsmanagemententität, MME, ob ein Teilnehmergerät, das auf die erste MME zugreift, ein Teilnehmergerät innerhalb der Versorgung eines zweiten "MME-Pools" ist, wobei sich die erste MME in einem ersten "MME-Pool" befindet und wobei der erste "MME-Pool" ein Sicherungs-"MME-Pool" des zweiten "MME-Pools" ist und wobei das Teilnehmergerät innerhalb der Versorgung des zweiten "MME-Pools" auf den ersten "MME-Pool" zugreift, wenn in dem zweiten "MME-Pool" ein Fehler auftritt; und
Entlasten (S302) des Teilnehmergeräts, wenn das Teilnehmergerät das Teilnehmergerät innerhalb der Versorgung des zweiten "MME-Pools" ist und wenn der zweite "MME-Pool" in einen Normalzustand zurückkehrt, durch die erste MME, wobei sich das Entlasten auf das Abbauen einer S1-Verbindung und einer Funkbetriebsmittelsteuerungs-Verbindung, RRC-Verbindung, zwischen der ersten MME und dem Teilnehmergerät bezieht.

2. Verfahren nach Anspruch 1, wobei das Bestimmen (S301), ob ein Teilnehmergerät, das auf die erste MME zugreift, ein Teilnehmergerät innerhalb der Versorgung eines zweiten "MME-Pools" ist, durch eine erste MME, Folgendes umfasst:
Bestimmen (S640), ob das Teilnehmergerät ein Teilnehmergerät innerhalb der Versorgung des zweiten "MME-Pools" ist, in Übereinstimmung mit durch das Teilnehmergerät registrierten Nachverfolgungsbereichsinformationen.

3. Verfahren nach Anspruch 2, wobei das Verfahren vor dem Bestimmen (S640), ob ein Teilnehmergerät, das auf die erste MME zugreift, ein Teilnehmergerät innerhalb der Versorgung eines zweiten "MME-Pools" ist, durch eine erste MME, ferner Folgendes umfasst:
Empfangen (S610) von Nachverfolgungsbereichsinformationen, die durch eine Basisstation berichtet werden, wobei das Teilnehmergerät innerhalb der Versorgung der Basisstation ist; und
Empfangen (S620) der durch das Teilnehmergerät registrierten und durch das Teilnehmergerät berichteten Nachverfolgungsbereichsinformationen; und
wobei das Bestimmen (S640), ob ein Teilnehmergerät, das auf die erste MME zugreift, ein Teilnehmergerät innerhalb der Versorgung eines zweiten "MME-Pools" ist, durch eine erste MME Folgendes umfasst:
Bestimmen, ob die durch die Basisstation berichteten Nachverfolgungsbereichsinformationen mit den durch das Teilnehmergerät registrierten Nachverfolgungsbereichsinformationen konsistent sind; und
Bestimmen, dass das Teilnehmergerät ein Teilnehmergerät innerhalb der Versorgung des zweiten "MME-Pools" ist, wenn die durch die Basisstation berichteten Nachverfolgungsbereichsinformationen mit den durch das Teilnehmergerät registrierten Nachverfolgungsbereichsinformationen konsistent sind.

4. Verfahren nach Anspruch 2 oder 3, wobei die durch das Teilnehmergerät registrierten Nachverfolgungsbereichsinformationen eine Nachverfolgungsbereichsidentität, TAI, oder ein Nachverfolgungsbereichscode, TAC, sind.

5. Verfahren nach Anspruch 1, das ferner Folgendes umfasst:
Zuordnen einer Teilnehmeridentität zu dem Teilnehmergerät, wobei die Teilnehmeridentität einen Merker umfasst und ein Wert des Merkers ein im Voraus festgelegter Wert ist, wenn das Teilnehmergerät über eine S1-Verbindung zwischen einer Basisstation innerhalb der Versorgung des zweiten "MME-Pools" und der ersten MME auf die erste MME zugreift; und
wobei das Bestimmen (S301), ob ein Teilnehmergerät, das auf die erste MME zugreift, ein Teilnehmergerät innerhalb der Versorgung eines zweiten "MME-Pools" ist, durch eine erste MME, Folgendes umfasst:
Bestimmen, ob der Merker in der Teilnehmeridentität der im Voraus festgelegte Wert ist; und
Bestimmen, dass das Teilnehmergerät ein Teilnehmergerät innerhalb der Versorgung des zweiten "MME-Pools" ist, falls der Merker der im Voraus festgelegte Wert ist.

6. Verfahren nach Anspruch 1, das ferner Folgendes umfasst:
Zuordnen einer Teilnehmeridentität zu dem Teilnehmergerät, wobei die Teilnehmeridentität eine M-TMSI umfasst und wobei ein Wert der M-TMSI innerhalb eines im Voraus festgelegten Zahlensegments liegt, wenn das Teilnehmergerät über eine S1-Verbindung zwischen einer Basisstation innerhalb der Versorgung des zweiten "MME-Pools" und der ersten MME auf die erste MME zugreift; und
wobei das Bestimmen (S301), ob ein Teilnehmergerät, das auf die erste MME zugreift, ein Teilnehmergerät innerhalb der Versorgung eines zweiten "MME-Pools" ist, durch eine erste MME, Folgendes umfasst:
Bestimmen, ob der Wert der M-TMSI in der Teilnehmeridentität innerhalb des im Voraus festgelegten Zahlensegments liegt; und
Bestimmen, dass das Teilnehmergerät ein Teilnehmergerät innerhalb der Versorgung des zweiten "MME-Pools" ist, falls der Wert der M-TMSI innerhalb des im Voraus festgelegten Zahlensegments liegt.

7. Verfahren nach einem der Ansprüche 1 bis 6, wobei das Entlasten (S302) des Teilnehmergeräts durch die erste MME Folgendes umfasst:
Entlasten des Teilnehmergeräts innerhalb einer im Voraus festgelegten Netzeinstellungszeitdauer, wenn das Teilnehmergerät ein Teilnehmergerät innerhalb der Versorgung des zweiten "MME-Pools" ist und wenn der zweite "MME-Pool" in den Normalzustand zurückkehrt.

8. Vorrichtung zum Managen eines Teilnehmergeräts, das auf eine erste Mobilitätsmanagemententität, MME, angewendet wird, wobei sich die erste MME in einem ersten "MME-Pool" befindet, wobei der erste "MME-Pool" ein Sicherungs-"MME-Pool" eines zweiten "MME-Pools" ist, und wobei ein Teilnehmergerät innerhalb der Versorgung des zweiten "MME-Pools" auf den ersten "MME-Pool" zugreift, wenn in dem zweiten "MME-Pool" ein Fehler auftritt, wobei die Vorrichtung Folgendes umfasst:
eine Bestimmungseinheit (111), die dafür konfiguriert ist, zu bestimmen, ob ein Teilnehmergerät, das auf die erste MME zugreift, das Teilnehmergerät innerhalb der Versorgung des zweiten "MME-Pools" ist; und
eine Entlastungseinheit (112), die dafür konfiguriert ist, das Teilnehmergerät zu entlasten, wenn das Teilnehmergerät das Teilnehmergerät innerhalb der Versorgung des zweiten "MME-Pools" ist und wenn der zweite "MME-Pool" in einen Normalzustand zurückkehrt, wobei sich das Entlasten auf das Abbauen einer S1-Verbindung und einer Funkbetriebsmittelsteuerungs-Verbindung, RRC-Verbindung, zwischen der ersten MME und dem Teilnehmergerät bezieht.

9. Vorrichtung nach Anspruch 8, wobei die Bestimmungseinheit (111) in Übereinstimmung mit durch das Teilnehmergerät registrierten Nachverfolgungsbereichsinformationen bestimmt, ob das Teilnehmergerät ein Teilnehmergerät innerhalb der Versorgung des zweiten "MME-Pools" ist.

10. Vorrichtung nach Anspruch 9, die ferner Folgendes umfasst:
eine Empfangseinheit (113), die dafür konfiguriert ist, durch eine Basisstation berichtete Nachverfolgungsbereichsinformationen und die durch das Teilnehmergerät registrierten und durch das Teilnehmergerät berichteten Nachverfolgungsbereichsinformationen zu empfangen, wobei das Teilnehmergerät innerhalb der Versorgung der Basisstation ist; und
wobei die Bestimmungseinheit (111) spezifisch konfiguriert ist zum: Bestimmen, dass das Teilnehmergerät ein Teilnehmergerät innerhalb der Versorgung des zweiten "MME-Pools" ist, wenn die durch die Basisstation berichteten Nachverfolgungsbereichsinformationen mit den durch das Teilnehmergerät registrierten Nachverfolgungsbereichsinformationen konsistent sind.

11. Vorrichtung nach Anspruch 9 oder 10, wobei die durch das Teilnehmergerät registrierten Nachverfolgungsbereichsinformationen eine Nachverfolgungsbereichsidentität, TAI, oder ein Nachverfolgungsbereichscode, TAC, sind.

12. Vorrichtung nach Anspruch 11, die ferner Folgendes umfasst:
eine Zuordnungseinheit (114), die konfiguriert ist zum: Zuordnen einer Teilnehmeridentität zu dem Teilnehmergerät, wobei die Teilnehmeridentität einen Merker umfasst und wobei ein Wert des Merkers ein im Voraus festgelegter Wert ist, wenn das Teilnehmergerät über eine S1-Verbindung zwischen einer Basisstation innerhalb der Versorgung des zweiten "MME-Pools" und der ersten MME auf die erste MME zugreift; und
wobei die Bestimmungseinheit (111) spezifisch konfiguriert ist zum: Bestimmen, dass das Teilnehmergerät ein Teilnehmergerät innerhalb der Versorgung des zweiten "MME-Pools" ist, wenn der Merker in der Teilnehmeridentität der im Voraus festgelegte Wert ist.

13. Vorrichtung nach Anspruch 11, die ferner Folgendes umfasst:
eine Zuordnungseinheit (114), die konfiguriert ist zum: Zuordnen einer Teilnehmeridentität zu dem Teilnehmergerät, wobei die Teilnehmeridentität eine M-TMSI umfasst und wobei ein Wert der M-TMSI innerhalb eines im Voraus festgelegten Zahlensegments liegt, wenn das Teilnehmergerät über eine S1-Verbindung zwischen einer Basisstation innerhalb der Versorgung des zweiten "MME-Pools" und der ersten MME auf die erste MME zugreift; und
wobei die Bestimmungseinheit (111) spezifisch konfiguriert ist zum: Bestimmen, dass das Teilnehmergerät ein Teilnehmergerät innerhalb der Versorgung des zweiten "MME-Pools" ist, wenn der Wert der M-TMSI in der Teilnehmeridentität innerhalb des im Voraus festgelegten Zahlensegments liegt.

14. Vorrichtung nach einem der Ansprüche 8 bis 13, wobei die Entlastungseinheit (112) das Teilnehmergerät unter Verwendung einer Lastneuabgleichprozedur entlastet; oder
die Entlastungseinheit (112) das Teilnehmergerät durch Ausführen einer Abmeldeoperation an dem Teilnehmergerät entlastet.

15. Vorrichtung nach einem der Ansprüche 8 bis 14, wobei die Entlastungseinheit (112) konfiguriert ist zum: Entlasten des Teilnehmergeräts, wenn das Teilnehmergerät ein Teilnehmergerät innerhalb der Versorgung des zweiten "MME-Pools" ist und die erste MME eine Benachrichtigungsnachricht empfängt, wobei die Benachrichtigungsnachricht durch eine zweite MME in dem zweiten "MME-Pool" gesendet wird und zum Benachrichtigen, dass der zweite "MME-Pool" in den Normalzustand zurückkehrt, verwendet wird.

16. Vorrichtung nach einem der Ansprüche 8 bis 14, die ferner Folgendes umfasst:
eine Detektionseinheit (115), die dafür konfiguriert ist, zu detektieren, ob eine Verbindung zwischen der ersten MME und einer zweiten MME normal ist, wobei sich die zweite MME in dem zweiten "MME-Pool" befindet; und
wobei die Entlastungseinheit (112) zum Entlasten des Teilnehmergeräts konfiguriert ist, wenn das Teilnehmergerät ein Teilnehmergerät innerhalb der Versorgung des zweiten "MME-Pools" ist und die Detektionseinheit (115) detektiert, dass die Verbindung zwischen der ersten MME und der zweiten MME normal ist.

17. Computerprogrammprodukt, das ein computerlesbares Medium umfasst, wobei das computerlesbare Medium eine Gruppe von Programmcode umfasst und dafür konfiguriert ist, das Verfahren nach einem der Ansprüche 1 bis 7 auszuführen.

## Revendications

1. Procédé de gestion d'un équipement utilisateur, comprenant :
le fait de déterminer (S301), par une première entité de gestion de mobilité, EGM, si un équipement utilisateur accédant à la première EGM est un équipement utilisateur dans la zone de couverture d'un second bassin EGM, dans lequel la première EGM est située dans un premier bassin EGM, et le premier bassin EGM est un bassin EGM de réserve, du second bassin EGM, et lorsqu'une faille se produit dans le second bassin EGM, l'équipement utilisateur dans la zone de couverture du second bassin EGM accède au premier bassin EGM ; et
le délestage (S302), par la première EGM, de l'équipement utilisateur lorsque l'équipement utilisateur est l'équipement utilisateur dans la zone de couverture du second bassin EGM et le second bassin EGM revient à un état normal, dans lequel le délestage se réfère au fait de libérer une connexion S1 et une connexion de commande de ressource radio, CRR, entre la première EGM et l'équipement utilisateur.

2. Procédé selon la revendication 1, dans lequel le fait de déterminer (S301), par une première EGM, si un équipement utilisateur accédant à la première EGM est un équipement utilisateur dans la zone de couverture d'un second bassin EGM comprend :
le fait de déterminer (S640) si l'équipement utilisateur est un équipement utilisateur dans la zone de couverture du second bassin EGM selon une information de zone de poursuite inscrite par l'équipement utilisateur.

3. Procédé selon la revendication 2, dans lequel avant de déterminer (S640), par une première EGM, si un équipement utilisateur accédant à la première EGM est un équipement utilisateur dans la zone de couverture d'un second bassin EGM, le procédé comprend en outre :
la réception (S610) d'une information de zone de poursuite rapportée par une station de base, dans lequel l'équipement utilisateur est dans la zone de couverture de la station de base ; et
la réception (S620) de l'information de zone de poursuite inscrite par l'équipement utilisateur et rapportée par l'équipement utilisateur ; et
le fait de déterminer (S640), par une première EGM, si un équipement utilisateur accédant à la première EGM est un équipement utilisateur dans la zone de couverture d'un second bassin EGM comprend :
le fait de déterminer si l'information de zone de poursuite rapportée par la station de base est cohérente avec l'information de zone de poursuite inscrite par l'équipement utilisateur ; et
lorsque l'information de zone de poursuite rapportée par la station de base est cohérente avec l'information de zone de poursuite inscrite par l'équipement utilisateur, le fait de déterminer que l'équipement utilisateur est un équipement utilisateur dans la zone de couverture du second bassin EGM.

4. Procédé selon la revendication 2 ou 3, dans lequel l'information de zone de poursuite inscrite par l'équipement utilisateur est une identité de zone de poursuite, IZP, ou un code de zone de poursuite, CZP.

5. Procédé selon la revendication 1, comprenant en outre :
lorsque l'équipement utilisateur accède à la première EGM par l'intermédiaire d'un lien S1 entre une station de base dans la zone de couverture du second bassin EGM et la première EGM, l'allocation d'une identité d'abonné à l'équipement utilisateur, dans lequel l'identité d'abonné comprend un drapeau, et une valeur du drapeau est une valeur préétablie ; et
le fait de déterminer (S301), par une première EGM, si un équipement utilisateur accédant à la première EGM est un équipement utilisateur dans la zone de couverture d'un second bassin EGM comprend :
le fait de déterminer si le drapeau dans l'identité d'abonné est la valeur préétablie ; et
si le drapeau est la valeur préétablie, le fait de déterminer que l'équipement utilisateur est un équipement utilisateur dans la zone de couverture du second bassin EGM.

6. Procédé selon la revendication 1, comprenant en outre :
lorsque l'équipement utilisateur accède à la première EGM par l'intermédiaire d'un lien S1 entre une station de base dans la zone de couverture du second bassin EGM et la première EGM, l'allocation d'une identité d'abonné à l'équipement utilisateur, dans lequel l'identité d'abonné comprend un M-TMSI, et une valeur du M-TMSI est dans un segment de nombre préétabli ; et
le fait de déterminer (S301), par une première EGM, si un équipement utilisateur accédant à la première EGM est un équipement utilisateur dans la zone de couverture du second bassin EGM comprend :
le fait de déterminer si la valeur du M-TMSI dans l'identité d'abonné est dans le segment de nombre préétabli ; et
si la valeur du M-TMSI est dans le segment de nombre préétabli, le fait de déterminer que l'équipement utilisateur est un équipement utilisateur dans la zone de couverture du second bassin EGM.

7. Procédé selon l'une quelconque des revendications 1 à 6, dans lequel le délestage (S302), par la première EGM, de l'équipement utilisateur comprend :
dans une période de temps d'ajustement de réseau préétabli, le délestage de l'équipement utilisateur lorsque l'équipement utilisateur est un équipement utilisateur dans la zone de couverture du second bassin EGM et que le second bassin EGM revient à l'état normal.

8. Appareil de gestion d'un équipement utilisateur, appliqué à une première entité de gestion de mobilité, EGM, dans lequel la première EGM est située dans un premier bassin EGM, le premier bassin EGM est un bassin EGM de réserve et un second bassin EGM, et lorsqu'une faille se produit dans le second bassin EGM, un équipement utilisateur dans la zone de couverture du second bassin EGM accède au premier bassin EGM, dans lequel l'appareil comprend :
une unité de détermination (111), configurée pour déterminer si un équipement utilisateur accédant à la première EGM est l'équipement utilisateur dans la zone de couverture du second bassin EGM ; et
une unité de délestage (112), configurée pour délester l'équipement utilisateur lorsque l'équipement utilisateur est l'équipement utilisateur dans la zone de couverture du second bassin EGM et que le second bassin EGM revient à un état normal, dans lequel le délestage se réfère au fait de libérer une connexion S1 et une connexion de commande de ressource radio, CRR, entre la première EGM et l'équipement utilisateur.

9. Appareil selon la revendication 8, dans lequel l'unité de détermination (111) détermine si l'équipement utilisateur est un équipement utilisateur dans la zone de couverture du second bassin EGM selon une information de zone de poursuite inscrite par l'équipement utilisateur.

10. Appareil selon la revendication 9, comprenant en outre :
une unité de réception (113), configurée pour recevoir une information de zone de poursuite rapportée par une station de base et l'information de zone de poursuite inscrite par l'équipement utilisateur et rapportée par l'équipement utilisateur, dans lequel l'équipement utilisateur est dans la zone de couverture de la station de base ; et l'unité de détermination (111) est spécifiquement configurée pour: lorsque l'information de zone de poursuite rapportée par la station de base est cohérente avec l'information de zone de poursuite inscrite par l'équipement utilisateur, déterminer que l'équipement utilisateur est un équipement utilisateur dans la zone de couverture du second bassin EGM.

11. Appareil selon la revendication 9 ou 10, dans lequel l'information de zone de poursuite inscrite par l'équipement utilisateur est une identité de zone de poursuite, IZP, ou un code de zone de poursuite, CZP.

12. Appareil selon la revendication 11, comprenant en outre :
une unité d'allocation (114), configurée pour : lorsque l'équipement utilisateur accède à la première EGM par l'intermédiaire d'un lien S1 entre une station de base dans la zone de couverture du second bassin EGM et la première EGM, allouer une identité d'abonné à l'équipement utilisateur, dans lequel l'identité d'abonné comprend un drapeau, et une valeur du drapeau est une valeur préétablie ; et
l'unité de détermination (111) est spécifiquement configurée pour : lorsque le drapeau dans l'identité d'abonné est la valeur préétablie, déterminer que l'équipement utilisateur est un équipement utilisateur dans la zone de couverture du second bassin EGM.

13. Appareil selon la revendication 11, comprenant en outre :
une unité d'allocation (114), configurée pour: lorsque l'équipement utilisateur accède à la première EGM par l'intermédiaire d'un lien S1 entre une station de base dans la zone de couverture du second bassin EGM et la première EGM, allouer une identité d'abonné à l'équipement utilisateur, dans lequel l'identité d'abonné comprend un M-TMSI, et une valeur du M-TMSI est dans un segment de nombre préétabli ; et
l'unité de détermination (111) est spécifiquement configurée pour : lorsque la valeur du M-TMSI dans l'identité d'abonné est dans le segment de nombre préétabli, déterminer que l'équipement utilisateur est un équipement utilisateur dans la zone de couverture du second bassin EGM.

14. Appareil selon l'une quelconque des revendications 8 à 13, dans lequel l'unité de délestage (112) déleste l'équipement utilisateur en utilisant une procédure de rééquilibrage de charge ; ou
l'unité de délestage (112) déleste l'équipement utilisateur en exécutant une opération de détachement sur l'équipement utilisateur.

15. Appareil selon l'une quelconque des revendications 8 à 14, dans lequel l'unité de délestage (112) est configurée pour: lorsque l'équipement utilisateur est un équipement utilisateur dans la zone de couverture du second bassin EGM et que la première EGM reçoit un message de notification, délester l'équipement utilisateur, dans lequel le message de notification est envoyé par une seconde EGM dans le second bassin EGM et est utilisé pour notifier que le second bassin EGM revient à l'état normal.

16. Appareil selon l'une quelconque des revendications 8 à 14, comprenant en outre :
une unité de détection (115), configurée pour détecter si un lien entre la première EGM et une seconde EGM est normal, dans lequel la seconde EGM est située dans le second bassin EGM ; et
l'unité de délestage (112) est configurée pour délester l'équipement utilisateur lorsque l'équipement utilisateur est un équipement utilisateur dans la zone de couverture du second bassin EGM et que l'unité de détection (115) détecte que le lien entre la première EGM et la seconde EGM est normal.

17. Produit programme d'ordinateur, comprenant un support lisible par ordinateur, dans lequel le support lisible par ordinateur comprend un groupe de codes de programme, et est configuré pour exécuter le procédé selon l'une quelconque des revendications 1 à 7.
